Europäisches Patentamt

European Patent Office

Office européen des brevets

(11) Publication number: **0 316 506 B1**

# EUROPEAN PATENT SPECIFICATION

(45) Date of publication of patent specification: **24.07.91**  (51) Int. Cl.⁵: **A01F 15/08, B65B 41/12**

(21) Application number: **88100490.7**

(22) Date of filing: **15.01.88**

(54) Machine for forming cylindrical bales of crop.

(30) Priority: **17.11.87 GB 8726865**

(43) Date of publication of application:
**24.05.89 Bulletin 89/21**

(45) Publication of the grant of the patent:
**24.07.91 Bulletin 91/30**

(84) Designated Contracting States:
**DE ES FR GB IT NL**

(56) References cited:
**EP-A- 0 239 761**
**EP-A- 0 254 337**
**CH-A- 361 525**
**GB-A- 2 163 701**

(73) Proprietor: **DEERE & COMPANY**
**1 John Deere Road**
**Moline, Illinois 61265(US)**

(72) Inventor: **Frerich, Josef**
**Flurstrasse 6**
**W-6661 Dietrichingen(DE)**
Inventor: **Viaud, Jean**
**16, Rue de L'école**
**F-57200 Sarreguemines(FR)**

(74) Representative: **Feldmann, Bernhard**
**DEERE & COMPANY European Office Patent**
**Department Steubenstrasse 36-42**
**W-6800 Mannheim 1(DE)**

# Description

This invention relates to a baling machine for forming cylindrical bales of crop wrapped with net or like material having a variable volume baling chamber, which is defined by belts and which has an inlet for crop on the underside of the machine, and a plate for guiding the wrapping material to the inlet which plate forms with the belts a bite for receiving the wrapping material and is disposed sufficiently close to the underside of the belts that wrapping material delivered to the bite will be gripped between the plate and the belts and advanced by the belts to the inlet.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale.

The baling chamber, in one type of machine, is defined by runs of driven belts which move outwardly to enlarge the chamber to accomodate the bale as it grows in size. The hay is caused by the driven movement of the belts to roll round upon itself into a core, and the core rotates about its horizontal axis and finally a completed bale is formed, the chamber being fed throughout with hay through its inlet on the underside of the machine. The completed bale is tied with twine to maintain its shape and is discharged through a gate formed by a rear portion of the machine.

During the fixing process no crop can be picked up and the machine is normally stopped. However, stopping of the machine is not necessary when it is provided with first and second baling chambers. An example for such a round baler is disclosed in EP-A-254 337. This is an earlier European application with the designation of DE, FR, GB and NL. Its content only needs to be considered for novelty purposes to the extent that same states are designated. The round baler of EP-A-254 337 has a crop inlet at its forward end and picked up crop will be baled at first in the first or forward baling chamber. After the bale has reached a predetermined size it will be transferred into the rearward or second baling chamber and completed. When a bale has been completed it is wrapped with net stored in a holder or drum on the back of the machine. The net shall be advanced by an air blast through an outlet housing with a curved end portion opening into the second baling chamber.

In our GB-A-2 189 189 we have described and claimed a round baler of this type which is adapted for wrapping the completed bale with net or foil using a guide plate as described in the introductory paragraph above.

However, problems can arise in delivering the net or plastic foil to the bale because the wrapping material is so light in weight and it tends not to follow its slightly sloping feed path in a consistent manner. It may, for example, bunch toward its longitudinal axis and then wrap only round the middle portion of the bale. Furthermore, it may fold and pile up on the guide plate with consequent jamming of the feed. In turn, such difficulties tend to stem from inaccurate delivery of the wrapping material to the initial bite between the guide plate and the belts.

In a basically different type of well-known round baler, the baling chamber is defined by driven fixed-position rolls and remains the same size throughout the baling operation. The baling chamber of such a machine is readily accessible in that net can be easily fed between neighbouring rolls as there are no belts closing the chamber. Hence the net can be introduced into the chamber simply under gravity from above (rather than below) the baling chamber, and feeding problems which may arise are rather different from those of an underfeed arrangement as described above.

Thus DE-A-3 431 428 discloses feeding foil, from above, between neighbouring fixed-position baling chamber rolls. The foil passes through a gap between two widely spaced wall plates in advance of the rolls. Due to the wind sensitivity and static loading of the light foil it is said to be possible for the foil to divert from its desired free path and foul one of the walls, leading to difficulties in feeding the foil accurately between the rolls. It is proposed to use a pair of opposed airstreams on either side of the foil to stop the foil diverting from its free path into contact with the walls.

The present invention is concerned only with the first type of machine mentioned above, and enables wrapping material to be delivered more accurately to the initial bite between the guide plate and belts of the machine described and claimed in our GB-A-2 189 189.

According to the present invention a blower apparatus is disposed to blow from only one side towards the wrapping material and the latter into contact with the belts upstream of the bite so that the wrapping material is carried by the belts to the bite.

The blower causes the wrapping material to be held firmly in contact with the belts and the material is thus delivered in a more positive and precise manner to the bite so that the material is presented thereto in a desired configuration and can consequently be delivered to the bale with fewer feeding difficulties.

An embodiment of the invention will now be described with reference to the accompanying diagrammatic drawings in which:

Fig. 1    is a right side elevational view of a baling machine of the present invention with apparatus for wrapping a completed bale with net;

Fig. 2    is a similar, but more detailed, view of a portion of the wrapping apparatus, including a blower apparatus for the net;

Fig. 3    shows in perspective the blower apparatus of Fig. 2; and

Fig. 4    is a lateral cross section through a diffusion chamber of the blower apparatus in Fig. 3.

In the drawings the baler includes a main frame 10 mounted on a pair of wheels 12. The main frame has an upright fore-and-aft extending wall 14 on either side, connected by transverse beams (not shown). A drawbar 16 is attached to a transverse beam at the front of the frame 10 and extends forwardly for attaching the baler to a tractor (also not shown) which pulls the machine.

A plurality of lateral rolls extends over the width of the machine. One set of rolls 18, 20, 22, 24, 26, 28 is journalled in the side walls 14, whilst another set consisting of rolls 30, 32, 34 is journalled in a gate 36 swingable about a top pivot 37. There is also a pair of chamber restricting rolls 38, 40 and two belt take-up rolls 42, 44.

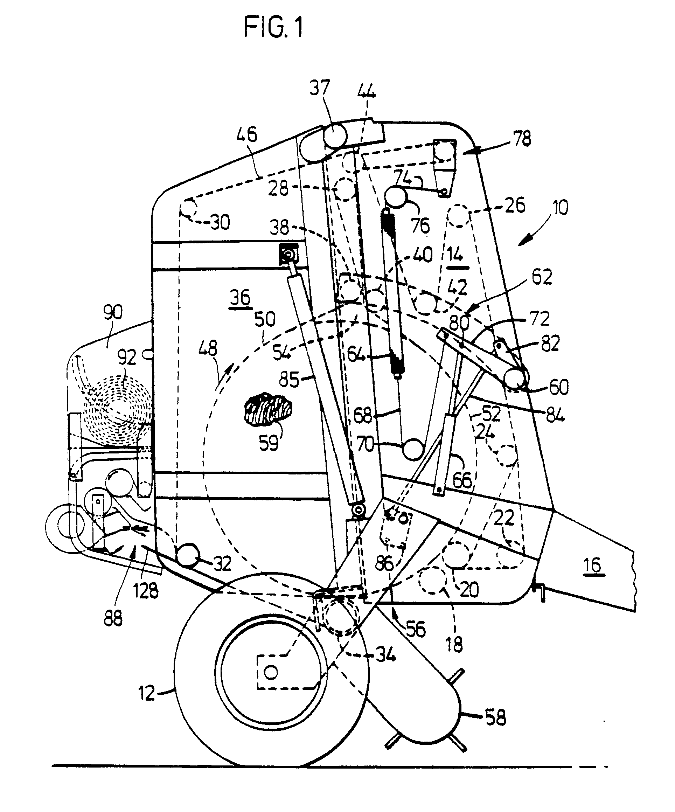

Six rubber belts 46 are trained side-by-side over the rolls, with the exception of the roll 18 which acts as a stripper roll, to provide the configuration shown and they move in the direction indicated by arrow 48, the stripper roll 18 being driven anti-clockwise as viewed in Fig. 1. However, alternate belts only are trained over the lower foremost roll 22, whilst the remaining belts by-pass this roll, to provide a staggered array. Upwardly extending runs 50, 52 of the belts 46 define a bale-forming chamber 54 the sides of which are provided by the side walls 14 and gate 36 and which has an inlet 56 for crop received from a pick-up 58 beneath it.

In order to accommodate the increasing diameter of a growing bale core 59 in the bale-forming chamber 54, the size of the chamber must also increase and a belt take-up and tensioning mechanism is provided at either side of the machine. These mechanisms include: a pair of rearwardly extending idler arms which are mounted rigidly at the forward end of the main frame 10 on a horizontal transverse shaft 60, providing a pivot connection for the arms, and of which the right hand arm 62 only is shown; the belt take-up roll 42 which is supported at either end at an intermediate location on the arms 62; and the pair of chamber restricting rolls 38, 40 supported at the free ends of the arms. The arms are biased in an anti-clockwise direction (in Fig. 1) by a pair of springs, one on either side of the main frame 10, of which only the right hand spring 64 is shown and by a pair of hydraulic tensioning cylinders of which again only the right hand one 66 is shown. Each spring 64 is connected at its lower end, via a chain 68 looped round a sprocket 70, to a lever portion 72 of the arm 62, the portion 72 being rigid with the pivot shaft 60, and is connected at its upper end, via a chain 74 over a sprocket 76, to one arm of a bell crank 78 the other arm of which bears one end of the take-up roll 44. The free end of the lever portion 72 is pivotally connected at a point 80 to the tensioning cylinder 66, loading the arm 72, of which the other end is pivotally anchored to the frame 10.

The lever portion 72 is rigidly connected through the pivot shaft 60 to a bale growth sensing arm 82 coupled, via a link 84, to a crank arm 86 pivotally mounted on the frame 10.

A pair of hydraulic actuators of which the right hand actuator 85 is shown is coupled between the frame 10 and the gate 36 to swing the gate about its pivot 37.

On the back of the gate 36 and below it, there is mounted apparatus 88 for wrapping a completed bale with net which serves to maintain the form of the cylindrical bale 59.

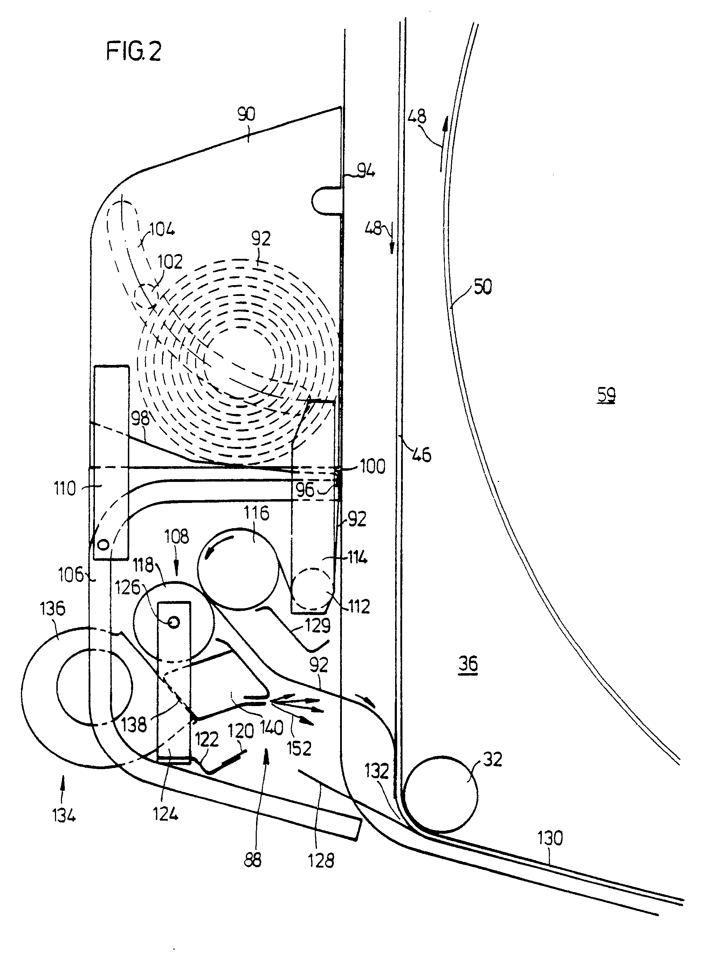

This apparatus 88 includes a holder 90 extending across the width of the gate 36 and containing a roll of net 92. The holder 90 has no front wall but abuts a panel 94 of the gate 36 which effectively closes the holder although there is a gap between the forward edge 96 of floor 98 of the holder 90 to provide an exit slot 100 through which the net can pass. The roll of net 92 is retained in position and braked by a downwardly spring-loaded crossbar 102 movable against the roll of net in an arcuate guide 104. A housing 106 for a net feeding and cutting mechanism 108 is located below the holder 90 and this pivotally supports, on either side, a strut 110 rigidly attached to the holder 90 enabling the holder to be swung downwardly and rearwardly from its position shown in Fig. 2 for re-loading the holder with a fresh roll of net 92. The housing 106 also receives a net spreader roll 112 rotatably mounted at the lower end of a leg 114 attached to the holder 90 on either side thereof. The spreader roll 112 is located below the axis of an upper net feed roll 116 and close to the latter. A lower feed roll 118 co-operates with the upper roll 116 to advance the net 92 therebetween.

A knife 120 is mounted on a bracket 122 attached to the lower end of a knife arm 124 which is pivotally connected, at its upper end, to an axial extension 126 of the lower feed roll 118 (at either end of the roll). The knife arm 124 is pivotally attached at its lower end to an hydraulic cylinder which is not shown to allow for clarity of other details, which has its head end coupled to the gate 36 and which acts, when triggered hydraulically from the sensing arm 82, link 84 and crank arm 86, to establish drive to the feed rolls 116, 118 as also to disengage the drive and move the knife 120 to cut the net 92. The details of the manner in which the cylinder is triggered are as described in our said European patent application. Also as described therein, the knife arm 124 is connected to the feed roll drive by a spring link (which is not shown in the present drawings). An abutment plate 129 for the net 92 is provided on the opposite side of the net to the knife 120 to support the net 92 during cutting.

The housing 106 also receives an upper end portion of a guide plate 128 which slopes forwardly and downwardly, and extends in close proximity to the underside of the belts 46 in a run 130 between the rolls 32 and 34 finally terminating in an upturned downstream end portion which follows the path of the belts to the inlet 56 of the baling chamber 54. The guide plate 128 is positioned to receive net, which has passed through the feeding and cutting mechanism 108, at a pinch point or bite 132 formed between the plate 128 and belts 46 and thence to press the net against the belt run 130 to advance the net.

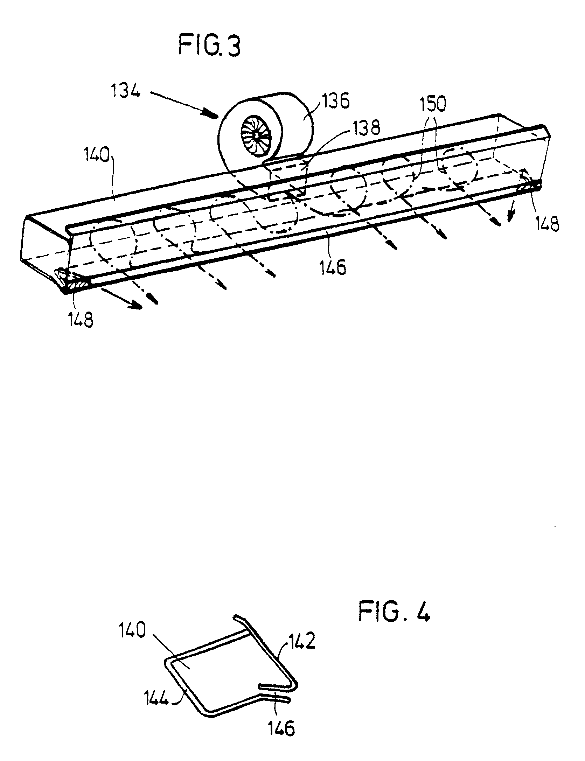

In order positively to direct the light weight net 92 to the bite 132 there is provided a blower apparatus 134. This includes a rotary blower 136 which is mounted centrally of the house 106 in an aperture therein so that it projects somewhat rearwardly therefrom and which has its outlet 138 below the feed roll 118. The outlet 138 debouches into a diffusion channel 140 extending over the full width of the net 92 (which is sufficient substantially to cover the bale 59), i. e. over the width of the baling chamber 54. The shape of the diffusion channel 140 is important and is best seen in Fig. 4. Its cross-section is approximately rectangular and it is formed of two angled sheets 142, 144 which provide between them an outlet slot 146 at the bottom forward corner of the rectangle. The ends of the slot 146 have inwardly angled walls 148 to converge the outer flow of air. The flow pattern through the diffusion channel 140 is indicated by arrows 150.

In operation, hay lying in a windrow is lifted and conveyed to the baling chamber 54 where the oppositely moving runs 50, 52 of the belts 46 cause the crop to turn clockwise (as viewed in Fig. 1) so as to form the bale core 59 of increasing size which eventually overcomes the tension in the belts brought about by the belt take-up and tensioning mechanisms, and the idler arms 62 consequently swing upwardly and thus the chamber 54 increases in size until a full-sized bale has been formed.

The bale 59 is then wrapped with net 92 using the apparatus 88. The cycle starts with the knife 120 still in its cutting position adjacent the abutment plate 129. With crop still being fed to the baling chamber 54 and the bale 59 still rotating, the knife arm cylinder is triggered to extent on the sensing arm 82 reaching a predetermined position. The cylinder thereby swings the knife arm 124 away from the cutting position toward the position shown in Fig. 2. The knife arm 124 consequently pulls with it the spring link causing engagement of the feed roll drive. At the same time the blower 136 is triggered to start and functions throughout the feeding of the net 92. The blowing serves initially to strip the net 92 cleanly from the knife 120, and then as the net 92 is advanced by the feed rolls 116, 118 the current of air, indicated by arrows 152, propels the net 92 hard flat against the belts 46 upstream of the bite 132. The net is carried by the belts (as more net is advanced) to the bite 132 where it is gripped and further advanced by the belt run 130. Finally the net 92 reaches the upturned downstream end portion of the plate 128 and thus enters the baling chamber 54 here it is carried round with the bale 59.

When three quarters of the circumference of the bale 59 has been wrapped by the net 92 the flow of hay to the baling chamber 54 is stopped. This can be brought about, for example, by an electrically operated dog clutch (not shown) triggered automatically by a counter meter and connected in a drive line to the pick-up 58, only the pick-up 58 being stopped.

By the completion of wrapping it is desirable to have two full turns of net on the bale so that there is entire overlap of the net. Once two full turns of net 92 cover the bale 59 the knife arm cylinder is triggered to contract thereby causing the knife arms 124 to swing upwardly from the position in Fig. 2. This moves the spring link to disengage the feed roll drive and at the same time the net 92 is thrust by the upward movement of the knife 120 against the abutment plate 129 and cut. The blower 136 is switched off.

The bale 59 continues to turn and the remainder of the cut net is drawn into the chamber 54 to wrap round the bale to complete the double wrap. The belts 46 are stopped, the gate 36 raised by the cylinder units 85, and the wrapped bale 59 is deposited on the ground. The gate 36 is closed and baling can start once more.

## Claims

1. A baling machine for forming cylindrical bales of crop wrapped with net or like material having a variable volume baling chamber (54), which is defined by belts (46) and which has an inlet (56) for crop on the underside of the machine, and a plate (128) for guiding the wrapping material (92) to the inlet (56) which plate (128) forms with the belts (46) a bite (132) for receiving the wrapping material (92) and is disposed sufficiently close to the underside of the belts (46) that wrapping material (92) delivered to the bite (132) will be gripped between the plate (128) and the belts (46) and advanced by the belts (46) to the inlet (56) characterised in that a blower apparatus (134) is disposed to blow air from only one side towards the wrapping material (92) and the latter into contact with the belts (46) upstream of the bite (132) so that the wrapping material (92) is carried by the belts (46) to the bite (132).

2. A baling machine according to claim 1 having feed rolls (116, 118) for the wrapping material (92) and a knife (120) for cutting the material (92) downstream of the feed rolls (116, 118) characterised in that an abutment plate (129) is disposed between the feed rolls (116, 118) and the knife (120) to support the material (92) during cutting, and the blower apparatus (134) is disposed with its blowing outlet (146) downstream of the abutment plate (129).

3. A baling machine according to claim 2 characterised in that the knife (120) is mounted on lower ends of a pair of knife arms (124) mounted at their upper ends for pivotal movement about the axis of a said feed roll (118), and the blower apparatus (134) extends in a region between the knife (120) and the feed roll (118).

4. A baling machine according to any preceding claim in which the said belts (46) upstream of the bite (132) are in an upright configuration characterised in that the blower apparatus (134) is mounted on a lower portion of the rear of the machine.

5. A baling machine according to any preceding claim characterised in that the blower apparatus (134) comprises a blower (136) and a diffusion channel (140) attached to an outlet (138) thereof, the diffusion channel (140) extending over the width of the baling chamber (54).

6. A baling machine according to claim 5 characterised in that the diffusion channel (140) is approximately rectangular in cross section with an inlet from the blower (136) in one upstanding wall and an outlet slot (146) in the region of the base of the opposite wall.

7. A baling machine according to claim 6 characterised in that the diffusion channel (140) is formed from a pair of angled plates (142, 144).

8. A baling machine according to any of claims 5 to 7 characterised in that the outer ends of the diffusion channel (140) are angled inwardly so as to converge the air stream (152).

**Revendications**

1. Machine de mise en balles pour former de balles cylindriques d'une récolte, enveloppées par un matériau en forme de filet ou analogue, et présentant une chambre de mise en balles (54) possédant un volume variable, qui est définie par des courroies (46) et possède une entrée (56) pour la récolte au-dessous de la machine, et une plaque (128) destinée à guider le matériau d'enveloppement (92) en direction de l'entrée (56), laquelle plaque (128) forme, avec les courroies (46), un interstice de saisie (132) destiné à recevoir le matériau d'enveloppement (92) et est suffisamment proche de la face inférieure des courroies (46) pour que le matériau d'enveloppement (92) envoyé à l'interstice de saisie (132) soit saisi entre la plaque (128) et les courroies (46) et entraîné par ces dernières en direction de l'entrée (56), caractérisé en ce qu'il est prévu un dispositif à ventilateur (134) pour souffler de l'air à partir d'un seul côté en direction du matériau d'enveloppement (92) et placer ce dernier en contact avec les courroies (46) en amont de l'interstice de saisie (132) de sorte que le matériau d'entraînement (92) est entraîné par les courroies (46) en direction de l'interstice de saisie (132).

2. Machine de mise en balles selon la revendication 1, comportant des rouleaux débiteurs (116, 118) pour le matériau d'enveloppement (92) et un couteau (120) destiné à couper le matériau (92) en aval des rouleaux débiteurs (116,118), caractérisée en ce qu'une plaque de butée (129) est disposée entre les rouleaux débiteurs (116, 118) et le couteau (120) de manière à supporter le matériau (92) pendant la coupe, et le dispositif à ventilateur (134) est disposé de telle sorte que sa sortie de soufflage (146) est située en aval de la plaque de butée (129).

3. Machine de mise en balles selon la revendication 2, caractérisée en ce que le couteau (120) est monté sur des extrémités inférieures d'un couple de bras portecouteau (124), dont les extrémités supérieures sont montées de manière à pouvoir pivoter autour de l'axe de l'un desdits rouleaux débiteurs (118), et que le dispositif à ventilateur (134) s'étend dans une zone située entre le couteau (120) et le rouleau débiteur (118).

4. Machine de mise en balles selon l'une quelconque des revendications précédentes, dans laquelle lesdites courroies (46) en amont de l'interstice de saisie (132) sont disposées verticalement, caractérisé en ce que le dispositif à ventilateur (134) est monté sur une partie inférieure de l'arrière de la machine.

5. Machine de mise en balles selon l'une quelconque des revendications précédentes, caractérisée en ce que le dispositif à ventilateur (134) comporte un ventilateur (136) et un canal de diffusion (140) fixé à une sortie (136) du ventilateur, le canal de diffusion (140) s'étendant sur la largeur de la chambre de mise en balles (54).

6. Machine de mise en balles selon la revendication 5, caractérisée en ce que le canal de diffusion (140) possède une section transversale approximativement rectangulaire avec une entrée s'étendant à partir du ventilateur (136), ménagée dans une paroi verticale, et une fente de sortie (146) située dans la région de la base de la paroi opposée.

7. Machine de mise en balles selon la revendication 6, caractérisée en ce que le canal de diffusion (140) est formé d'un couple de plaques coudées (142,144).

8. Machine de mise en balles selon l'une quelconque des revendications 5 à 7, caractérisée en ce que les extrémités extérieures du canal de diffusion (140) sont repliées vers l'intérieur de manière à faire converger l'écoulement d'air (152).

**Patentansprüche**

1. Ballenformmaschine zum Formen zylindrischer Ballen von Erntegut, die mit Netz oder dergleichen Material umwikkelt sind, mit einer Ballenformkammer (54) von veränderlichem Volumen, die durch Riemen (46) begrenzt ist und einen Einlaß (56) für das Erntegut auf der Unterseite der Maschine und eine Platte (128) zum Führen des Wickelmaterials (92) zu dem Einlaß (56) aufweist, wobei die Platte (128) mit den Riemen (46) einen Einlaufspalt (132) zur Aufnahme des Wickelmaterials (92) bildet und ausreichend nahe der Unterseite der Riemen (46) angeordnet ist, damit das Wickelmaterial (92), das dem Einlaufspalt (132) zugeliefert wird, zwischen der Platte (128) und den Riemen (46) erfaßt und durch die Riemen (46) dem Einlaß (56) zugeführt wird, dadurch gekennzeichnet, daß eine Gebläseeinrichtung (134) vorgesehen ist, um Luft von nur einer Seite in Richtung auf das Wickelmaterial (92) und das letztere in Kontakt mit den Riemen (46) stromaufwärts des Einlaufspaltes (132) zu blasen, so daß das Wickelmaterial (92) durch die Riemen (46) zu dem Einlaufspalt (132) gefördert wird.

2. Ballenformmaschine nach Anspruch 1 mit Förderwalzen (116, 118) für das Wickelmaterial (92) und einem Messer (120), um das Material (92) stromabwärts der Förderwalzen (116, 118) zu durchtrennen, dadurch gekennzeichnet, daß eine Anschlagplatte (129) zwischen den Förderwalzen (116, 118) und dem Messer (120) angeordnet ist, um das Material (92) während des Durchtrennens abzustützen, und daß die Gebläseeinrichtung (134) mit ihrem Auslaß (146) stromabwärts der Anschlagplatte (129) angeordnet ist.

3. Ballenformmaschine nach Anspruch 2, dadurch gekennzeichnet, daß das Messer (120) an unteren Enden von zwei Messerarmen (124) angeordnet ist, deren obere Enden um die Achse einer der genannten Förderwalzen (118) schwenkbar sind, und daß die Gebläseeinrichtung (134) sich in einen Bereich zwischen dem Messer (120) und der Förderwalze (118) erstreckt.

4. Ballenformmaschine nach irgendeinem der voranstehenden Ansprüche, bei der die genannten Riemen (46) stromaufwärts des Einlaufspaltes (132) sich in einer lotrechten Stellung befinden, dadurch gekennzeichnet, daß die Gebläseeinrichtung (134) in einem unteren Bereich an der Rückseite der Maschine angeordnet ist.

5. Ballenformmaschine nach irgendeinem der voranstehenden Ansprüche, dadurch gekennzeichnet, daß die Gebläseeinrichtung (134) ein Gebläse (136) und einen Diffusorkanal (140) aufweist, der an einem Auslaß (138) des Gebläses angebracht ist, wobei der Diffusorkanal (140) sich über die Breite der Ballenformkammer (54) erstreckt.

6. Ballenformmaschine nach Anspruch 5, dadurch gekennzeichnet, daß der Diffusorkanal (140) einen annähernd rechteckförmigen Querschnitt mit einem Einlaß von dem Gebläse (136) in einer aufrechten Wand und einem Auslaßschlitz (146) im Bereich der Basis der gegenüberliegenden Wand aufweist.

7. Ballenformmaschine nach Anspruch 6, dadurch gekennzeichnet, daß der Diffusorkanal (140) aus zwei Winkelplatten (142, 144) gebildet ist.

8. Ballenformmaschine nach irgendeinem der Ansprüche 5 bis 7, dadurch gekennzeichnet, daß die äußeren Enden des Diffusorkanals (140) nach innen zu winkelförmig ausgebildet sind, um den Luftstrom (152) zu konvergieren.

# FIG. 1

EP 0 316 506 B1

FIG. 2

9

FIG. 3

FIG. 4